# EUROPEAN PATENT SPECIFICATION

(11) **EP 3 175 980 B1**
(45) Date of publication and mention of the grant of the patent: **03.04.2019**
(21) Application number: 15828239.2
(22) Date of filing: 29.07.2015
(51) Int. Cl.: B32B 5/24, B32B 7/02, B32B 27/08, B32B 37/06, B32B 5/08

(54) **CONTINUOUS FIBER COMPOSITE AND METHOD FOR PREPARING CONTINUOUS FIBER COMPOSITE**
KONTINUIERLICHER FASERVERBUNDWERKSTOFF UND VERFAHREN ZUR HERSTELLUNG DES KONTINUIERLICHEN FASERVERBUNDWERKSTOFFS
COMPOSITE À FIBRES CONTINUES ET PROCÉDÉ DE PRÉPARATION DE COMPOSITE À FIBRES CONTINUES

(30) Priority: 29.07.2014 KR 20140096441
(43) Date of publication of application: 07.06.2017
(73) Proprietor: Lotte Chemical Corporation, Seoul, 05551 (KR)
(72) Inventor: KIM, Sang Woo, Daejeon 305-720 (KR); KO, Young Koan, Daejeon 305-772 (KR); KIM, Dae Gun, Daejeon 305-720 (KR); HAN, Hey Jin, Yuseong-gu, Daejeon, 34121 (CN); KIM, Won Seock, Yuseong-gu, Daejeon, 34121 (CN)
(74) Representative: Agasse, Stéphane
(86) International application number: PCT/KR2015/007954
(87) International publication number: WO 2016/018081

(56) References cited:
- EP-A1- 0 201 367
- WO-A1-00/00351
- WO-A1-02/064670
- JP-A- H0 890 659
- JP-A- 2011 063 029
- KR-A- 20110 011 495
- KR-A- 20140 005 398

## Description

### [TECHNICAL FIELD]

The present invention relates to a continuous fiber composite and a method for producing a continuous fiber composite, and more particularly to a continuous fiber composite having not only a high flexural strength and a high flexural modulus together with excellent mechanical properties, but also having a stable and robust internal structure, and a method for producing the continuous fiber composite.

### [BACKGROUND OF ART]

Because commercialized polyolefin resins have a large molecular weight and a high melt viscosity, it is not easy to impregnate fine fibers into the resin, and in particular, due to low fluidity of the polyolefin resin, many voids are generated when impregnated with continuous fibers, and thereby there is a limitation in that mechanical properties or the like of the produced composite can not be sufficiently increased.

Previously, a method of mixing or compounding a compatibilizer in the process of mixing a polyolefin resin and a filler such as a glass fiber, thereby improving compatibility between the polyolefin resin and the filler and improving the mechanical properties, has been widely used. Specifically, in order to improve the tensile strength, flexural strength, and impact strength of a polyolefin resin such as polypropylene, methods of adding a robust reinforcing material such as another polymer resin, a rubber component, or an inorganic filler are used.

However, addition of general reinforcing materials does not sufficiently improve the mechanical properties, and the compatibilizer used for uniformly mixing them with the polyolefin resin is relatively expensive and thus is not suitable as a general purpose material.

For example, U.S. Patent No. 4,469,138 discloses a method for producing a pipe for hot water by using a modified polyolefin (e.g., polypropylene) substituted with an organic acid in a range of 1 to 8 parts by weight when mixing a polypropylene resin and a carbon fiber.

In addition, Korean Patent Publication No. 2014-0046511 discloses a film for the formation of a composite material including a low-viscosity resin layer and a continuous fiber layer formed on any one surface of a carrier film, wherein the low-viscosity resin layer can contain a substance in a prepolymer state without containing a polymer substance, for example, a prepolymer capable of being crosslinked by UV or heat, or a two-liquid type of prepolymer.

WO 02/064670 A1 discloses a composite product produced from fibrous mats and polymer films.

### [Prior Art Document]

### [Patent Document]

(Patent Document 1) US Patent No. 4,469,138
(Patent Document 2) Korean Patent Publication No. 2014-0046511
(Patent Document 3) WO 02/064670 A1

### [DETAILED DESCRIPTION OF THE INVENTION]

### [Technical Problem]

It is an object of the present invention to provide a continuous fiber composite having not only excellent mechanical properties together with a high flexural strength and a high flexural modulus, but also having a stable and robust internal structure.

It is another object of the present invention to provide a method for producing a continuous fiber composite having not only excellent mechanical properties together with a high flexural strength and a high flexural modulus, but also having a stable and robust internal structure.

### [Technical Solution]

In order to achieve these objects, the present disclosure provides a continuous fiber composite including: a continuous fiber layer; a modified polyolefin layer formed on at least one surface of the continuous fiber layer and containing 50 wt% or more of a modified polyolefin resin grafted with a dicarboxylic acid component or an acid anhydride thereof; and a polyolefin resin layer containing a polyolefin resin formed on the modified polyolefin layer. The modified polyolefin resin grafted with the dicarboxylic acid component or an acid anhydride thereof has a melt index of 100 g/10 min at 230 °C to 300 g/10 min at 230 °C (ASTM D1238), and includes a modified polypropylene grafted with maleic acid or maleic anhydride.

The present disclosure also provides a method for producing a continuous fiber composite including the steps of: laminating a modified polyolefin layer containing 50 wt% or more of a modified polyolefin resin grafted with a dicarboxylic acid component or an acid anhydride thereof on at least one surface of a continuous fiber layer; and laminating a polyolefin resin layer containing a polyolefin resin on the modified polyolefin layer.

In addition, the present disclosure provides a method for producing a continuous fiber composite including the steps of: coating a modified polyolefin resin composition including a solid content containing 50 wt% or more of a modified polyolefin resin grafted with a dicarboxylic acid component or an acid anhydride thereof and an organic solvent on at least one surface of a continuous fiber layer; and coating a polymeric resin composition including a polyolefin resin on the modified polyolefin resin composition.

Hereinafter, a continuous fiber composite and a method for producing a continuous fiber composite according to a specific embodiment of the present invention will be described in more detail.

The modified polyolefin layer containing 50 wt% or more or 90 wt% or more of a modified polyolefin resin grafted with a dicarboxylic acid component or an acid anhydride thereof has a high compatibility as well as a high bonding strength with respect to each of the continuous fiber layer and the polyolefin resin layer. Therefore, the continuous fiber composite can secure high flexural strength and flexural modulus while reinforcing mechanical properties such as tensile strength and impact strength of the polyolefin resin, and further can have a stable and robust internal structure.

In addition, when the modified polyolefin layer containing 50 wt% or more or 90 wt% or more of a modified polyolefin resin grafted with a dicarboxylic acid component or an acid anhydride thereof is applied, the occurrence of void spaces or pores at the interface between the continuous fiber layer and the polyolefin resin layer or at the inside of the continuous fiber layer can be minimized, and the continuous fiber composite can have a low void content, for example, a void content of 7 % or less.

The characteristic of the above-mentioned continuous fiber composite is that the modified polyolefin layer containing 50 wt% or more or 90 wt% or more of a modified polyolefin resin grafted with a dicarboxylic acid component or an acid anhydride thereof is formed on at least one surface of the continuous fiber layer.

The modified polyolefin layer can contain 50 wt% or more or 90 wt% or more of the modified polyolefin resin grafted with a dicarboxylic acid component or an acid anhydride thereof, and only the modified polyolefin resin grafted with a dicarboxylic acid component or an acid anhydride thereof can be included as a base material of the modified polyolefin layer.

As the modified polyolefin resin grafted with a dicarboxylic acid component or an acid anhydride thereof is included within the above content range, the modified polyolefin layer has high compatibility as well as high bonding strength with respect to the continuous fiber layer and the polyolefin resin layer, and the continuous fiber composite can secure mechanical properties such as tensile strength, impact strength, flexural strength, and flexural modulus at a high level, and further the internal structure of the continuous fiber composite may be stable and more robust.

The modified polyolefin resin grafted with a dicarboxylic acid component or an acid anhydride thereof refers to a polymer in which a dicarboxylic acid component or an acid anhydride thereof is grafted to a polyolefin main chain to form a branched chain.

The content of the dicarboxylic acid component or the acid anhydride thereof grafted in the modified polyolefin resin may be 5 wt% to 15 wt%, or 8 wt% to 14 wt%, or 9 wt% to 13 wt%.

If the dicarboxylic acid component or an acid anhydride thereof is grafted to the polyolefin resin in an amount of less than 5 wt%, it may be difficult for the modified polyolefin layer to have sufficient compatibility and bonding strength with respect to the continuous fiber layer and the polyolefin resin layer.

In addition, if the dicarboxylic acid component or an acid anhydride thereof is grafted to the polyolefin resin in an amount exceeding 15 wt%, the mechanical properties or flexibility of the modified polyolefin layer or the continuous fiber composite may be deteriorated.

The dicarboxylic acid component refers to a compound containing two carboxyl groups or a derivative thereof, and examples thereof include one dicarboxylic acid or a linear or branched C₁-C₁₀ alkyl ester compound thereof selected from the group consisting of maleic acid, phthalic acid, itaconic acid, citraconic acid, alkenyl succinic acid, cis-1,2,3,6-tetrahydrophthalic acid, and 4-methyl-1,2,3,6-tetrahydrophthalic acid.

The ratio of the dicarboxylic acid component or an acid anhydride thereof to be grafted can be determined from results obtained through acid-base titration of the modified polyolefin resin.

For example, about 1 g of the modified polypropylene resin is introduced to 150 ml of xylene saturated with water, followed by refluxing for about 2 hours. A small amount of a 1 wt% thymol blue-dimethylformamide solution is then added thereto, followed by slight over-titration using a 0.05 N sodium hydroxide-ethyl alcohol solution to obtain a navy blue solution. Then, the solution is back titrated with the use of a 0.05 N hydrochloric acid-isopropyl alcohol solution until the solution turns yellow, thereby determining an acid value. From this acid value, the amount of dicarboxylic acid grafted to the modified polypropylene resin can be calculated.

More specific examples of the modified polyolefin resin grafted with the dicarboxylic acid component or an acid anhydride thereof may include modified polypropylene grafted with 5 wt% to 15 wt% of maleic acid or maleic anhydride.

Further, the modified polyolefin resin grafted with the dicarboxylic acid component or an acid anhydride thereof has a melt index of 100 g/10 min to 300 g/10 min (ASTM D 1238, 230 °C).

If the melt index of the modified polyolefin resin grafted with the dicarboxylic acid component or an acid anhydride thereof is too low, production and molding of the continuous fiber composite may not be easy, and it is not possible to sufficiently reduce void spaces or pores at the interface between the continuous fiber layer and the polyolefin resin layer or at the inside of the continuous fiber layer.

If the melt index of the modified polyolefin resin grafted with the dicarboxylic acid component or an acid anhydride thereof is too high, it can be difficult for the modified polyolefin layer to have suitable impact strength due to a low viscosity, thereby causing a decrease in the tensile strength, flexural strength, or elastic modulus.

The modified polyolefin resin grafted with the dicarboxylic acid component or an acid anhydride thereof may have a weight average molecular weight of 100,000 to 900,000, or 400,000 to 800,000.

As used herein, the weight average molecular weight refers to a weight average molecular weight in terms of polystyrene measured by the GPC method.

The polyolefin resin contained in the polyolefin resin layer is not particularly limited, and may include polypropylene having a melt index of 1 g/10 min to 100 g/10 min (ASTM D1238, 230 °C) or 30 g/10 min to 80 g/10 min (ASTM D1238, 230 °C) in consideration of tensile strength, impact strength, and the like of the continuous fiber composite.

In addition, the polyolefin resin layer may include a polypropylene resin having an isotactic index of 96 to 100.

The continuous fiber layer can be used without any particular limitation as long as it is known to be used as a composite material together with a polymer resin or plastic, and examples thereof include carbon fiber, glass fiber, heat-resistant polymer fiber, and the like.

Examples of the heat-resistant polymer fiber may include aramid fiber, nylon fiber, aniline fiber, and the like.

The diameter of the continuous fiber is not particularly limited, and may be, for example, 1 to 30 *µ*m.

Further, the fiber bundle of the continuous fiber layer may be 100 to 3,000 tex.

The specific shape of the interior of the continuous fiber layer is not particularly limited, and for example, the continuous fiber layer may include a structure in which one or more types of fibers selected from the group consisting of carbon fiber, glass fiber, and heat-resistant polymer fiber are arranged in the same direction, or it may include a structure in the form of woven fabric in which one or more types of fibers selected from the group consisting of carbon fiber, glass fiber, and heat-resistant polymer fiber are woven and formed.

The continuous fiber composite may include 40 wt% to 90 wt% of the continuous fiber layer, 2 wt% to 20 wt% of the modified polyolefin layer, and 5 wt to 50 wt% of the polyolefin resin layer.

The specific shape and size of the continuous fiber composite are not particularly limited, but for example, the overall thickness of the continuous fiber composite may be 0.1 mm to 10 mm or 0.2 mm to 5 mm.

Further, in the continuous fiber composite, the thickness ratio of the modified polyolefin layer to the continuous fiber layer may be 0.05 to 1 or 0.1 to 0.5. The thickness ratio of the polyolefin resin layer to the continuous fibrous layer may be 0.1 to 2, or 0.3 to 1.2, or 0.5 to 1.0.

The continuous fiber composite may include one or more of the continuous fiber layers, and the modified polyolefin layer may be formed on one surface or both surfaces of the continuous fiber layer.

As described above, the continuous fiber composite provided according to the above-described production method can have not only excellent mechanical properties together with high flexural strength and flexural modulus but also a stable and robust internal structure.

Specifically, the continuous fiber composite can secure high flexural strength and flexural modulus while reinforcing mechanical properties such as tensile strength and impact strength of the polyolefin resin, and further can have a stable and robust internal structure and a low void content.

The continuous fiber composite may be formed through a thermocompression method which is known to be generally used in the art.

Specifically, the continuous fiber composite can be obtained by laminating a modified polyolefin layer or a modified polyolefin film containing 50 wt% or more of a modified polyolefin resin grafted with a dicarboxylic acid component or an acid anhydride thereof on at least one surface of the continuous fiber layer, and laminating a polyolefin resin layer or a polyolefin resin film on the modified polyolefin layer or the modified polyolefin film.

The above-described lamination process can be carried out by pressure-bonding respective layers or films under conditions of high temperature and high pressure using a double belt press and/or a compression press, or the like.

The step of laminating a modified polyolefin layer or a modified polyolefin film containing 50 wt% or more of a modified polyolefin resin grafted with a dicarboxylic acid component or an acid anhydride thereof on at least one surface of the continuous fiber layer can include a step of laminating the modified polyolefin layer on at least one surface of the continuous fiber layer by applying a pressure of 0.1 MPa to 2.0 MPa at a temperature of 100 °C to 320 °C.

The pressure may be applied for 0.5 to 60 minutes, and the cooling time under the condition where a pressure is applied may be from 0.5 to 60 minutes.

The step of laminating a polyolefin resin layer containing a polyolefin resin on the modified polyolefin layer can include a step of laminating the polyolefin layer on the modified polyolefin layer by applying a pressure of 0.1 MPa to 2.0 MPa at a temperature of 100 °C to 320 °C.

The pressure can be applied for 0.5 to 60 minutes, and the cooling time under the condition where a pressure is applied may be from 0.5 to 60 minutes.

The modified polyolefin layer can contain 50 wt% or more or 90 wt% or more of the modified polyolefin resin grafted with a dicarboxylic acid component or an acid anhydride thereof, and only the modified polyolefin resin grafted with a dicarboxylic acid component or an acid anhydride thereof can be included as a base material of the modified polyolefin layer.

More specific contents of the continuous fiber composite include the contents described above for the continuous fiber composite according to one embodiment of the present invention.

According to another embodiment of the present invention, a method for producing a continuous fiber composite including the steps of: coating a modified polyolefin resin composition including a solid content containing 50 wt% or more of a modified polyolefin resin grafted with a dicarboxylic acid component or an acid anhydride thereof and an organic solvent on at least one surface of a continuous fiber layer; and coating a polymeric resin composition including a polyolefin resin on the modified polyolefin resin composition, is provided.

As described above, the continuous fiber composite provided according to the above-described production method can have not only excellent mechanical properties together with high flexural strength and flexural modulus, but also a stable and robust internal structure.

Specifically, the continuous fiber composite can secure high flexural strength and flexural modulus while reinforcing mechanical properties such as tensile strength and impact strength of the polyolefin resin, and further can have a stable and robust internal structure and a low void content.

The continuous fiber composite may be formed through a polymeric resin coating method which is known to be generally used in the art.

The modified polyolefin layer can be formed on at least one surface of the continuous fiber layer by coating a modified polyolefin resin composition including a solid content containing 50 wt% or more or 90 wt% or more of a modified polyolefin resin grafted with a dicarboxylic acid component or an acid anhydride thereof and an organic solvent on at least one surface of a continuous fiber layer, and drying it.

The drying may be carried out after coating the modified polyolefin resin composition, and the drying may be carried out collectively after coating the polymer resin composition containing the polyolefin resin.

The modified polyolefin layer formed as described above may contain 50 wt% or more or 90 wt% or more of a modified polyolefin resin grafted with a dicarboxylic acid component or an acid anhydride thereof, and only the modified polyolefin resin grafted with a dicarboxylic acid component or an acid anhydride thereof can be included as a base material of the modified polyolefin layer.

Accordingly, the solid content can include 50 wt% or more or 90 wt% or more of a modified polyolefin resin grafted with a dicarboxylic acid component or an acid anhydride thereof, and it can be composed of a modified polyolefin resin grafted with the dicarboxylic acid component or the acid anhydride thereof.

The polyolefin resin layer can be formed on the modified polyolefin layer through the step of coating a modified polyolefin resin composition containing a polyolefin resin on the modified polyolefin resin composition and drying it.

The method for producing the continuous fiber composite can further include drying the above coated resin composition containing 50 wt% or more of a modified polyolefin resin grafted with a dicarboxylic acid component or an acid anhydride thereof.

The method for producing the continuous fiber composite can further include drying the above coated polymer resin composition.

More specific contents of the continuous fiber composite include the contents described above for the continuous fiber composite of one embodiment of the invention.

### [ADVANTAGEOUS EFFECTS]

According to the present invention, a continuous fiber composite having not only a high flexural strength and a high flexural modulus together with excellent mechanical properties but having also a stable and robust internal structure, and a method for producing the continuous fiber composite, can be provided.

The continuous fiber composite can secure high flexural strength and flexural modulus while reinforcing mechanical properties such as tensile strength and impact strength of the polyolefin resin, and further can have a stable and robust internal structure and a low void content.

### [DETAILED DESCRIPTION OF THE EMBODIMENTS]

The present invention will be described in more detail below with reference to the following examples. However, these examples are provided only for illustration, and are not to be construed as limiting the prevent invention.

### [Examples and comparative examples: Production of polyolefin continuous fiber composite]

### Examples 1 to 11

A modified polypropylene film grafted with 10 wt% of maleic anhydride [thickness: 80 *µ*m, melt index of 150 g/10 min (230 °C)] was laminated on both surfaces of a continuous fiber layer consisting of carbon fiber [thickness: 500 *µ*m, fiber: Toray T-700/12K, woven fabric shape: plain) by using a double belt press and a compression press and applying the conditions of temperature and pressure described in Table 1 below.

Then, the polypropylene film [thickness: 360 *µ*m, melt index of 8 g/10 min (230 °C), isotactic index of 97] was laminated on the modified polypropylene film by using a double belt press and a compression press and applying the conditions of temperature and pressure described in Table 1 below.

### Comparative Examples 1 to 3

A polypropylene film [thickness: 100 *µ*m, melt index of 8 g/10 min (230 °C), isotactic index of 97] was laminated on both surfaces of a continuous fiber layer consisting of carbon fiber [thickness: 450 *µ*m, product name: 1540 (Toray T-700/12K Plain)] by using a double belt press and a compression press and applying the conditions of temperature and pressure described in Table 1 below.

**[Table 1] Composition and production conditions of the continuous fiber composites of Examples 1 to 11 and Comparative Examples 1 to 3**

| | Composition of continuous fiber composite (wt%) | | | Production conditions | |
|---|---|---|---|---|---|
| | Polyolefin resin layer | Continuous fiber layer | Modified polyolefin layer | Pressure [MPa] | Temperature [°C] |
| Example 1 | 28 | 62 | 10 | 0.5 | 190 |
| Example 2 | 17 | 73 | 10 | 0.5 | 210 |
| Example 3 | 16 | 74 | 10 | 0.5 | 250 |
| Example 4 | 48 | 42 | 10 | 0.5 | 190 |
| Example 5 | 48 | 42 | 10 | 1 | 190 |
| Example 6 | 48 | 42 | 10 | 1.5 | 190 |
| Example 7 | 48 | 42 | 10 | 0.5 | 220 |
| Example 8 | 48 | 42 | 10 | 1 | 220 |
| Example 9 | 48 | 42 | 10 | 1.5 | 220 |
| Example 10 | 48 | 42 | 10 | 0.5 | 250 |
| Example 11 | 48 | 42 | 10 | 1 | 250 |
| Comparative Example 1 | 34 | 66 | - | 0.5 | 190 |
| Comparative Example 2 | 27 | 73 | - | 0.5 | 210 |
| Comparative Example 3 | 26 | 74 | - | 0.5 | 250 |

### Comparative Examples 4 to 11

A compounding film [thickness: 360 *µ*m] containing a modified polypropylene grafted with 10 wt% of maleic anhydride [melt index of 150 g/10 min (230 °C)] and polypropylene resin [8 g/10 min (230 °C), isotactic index of 97] was laminated on both surfaces of a continuous fiber layer consisting of carbon fiber [thickness: 450 *µ*m, product name: 1540 (Toray T-700/12K Plain)] by using a double belt press and a compression press and applying the conditions of temperature and pressure described in Table 2 below.

**[Table 2] Composition and production conditions of the continuous fiber composites of comparative examples**

| | Composition of continuous fiber composite (wt%) | | Production conditions | |
|---|---|---|---|---|
| | Surface layer | Continuous fiber layer | Pressure [MPa] | Temperature [°C] |
| Comparative Example 4 | Mixture of polyolefin resin (48 wt%) and modified polyolefin (10 wt%) | 42 | 0.5 | 190 |
| Comparative Example 5 | | 10 | 1 | 190 |
| Comparative Example 6 | | 10 | 1.5 | 190 |
| Comparative Example 7 | | 10 | 0.5 | 220 |
| Comparative Example 8 | | 10 | 1 | 220 |
| Comparative Example 9 | | 10 | 1.5 | 220 |
| Comparative Example 10 | | 10 | 0.5 | 250 |
| Comparative Example 11 | | 10 | 1 | 250 |

### [Experimental example: Measurement and Observation of Physical Properties of Continuous Fiber Composite]

### (1) Measurement method of flexural strength and flexural modulus

Specimens having a size of 25 cm * 60 cm (width * length) were produced from the continuous fiber composite obtained in the above examples and comparative examples by a water jet cutting method, and in accordance with ASTM D790, the flexural strength and flexural modulus were measured using an INSTRON 5589 apparatus through a method of measuring up to a 5 % strain limit section at a test speed of 1 mm/min under a temperature condition of standard temperature.

The value of the measurement result was determined by averaging three values excluding the maximum value and the minimum value after five measurements.

### (2) Measurement method of tensile strength and tensile modulus

Specimens having a size of 25 cm * 250 cm * 2.5 cm (width * length * thickness) were produced from the continuous fiber composites obtained in the above examples and comparative examples by the water jet cutting method, and in accordance with ASTM D3039, the tensile strength and tensile modulus were measured by using an INSTRON 5589 apparatus and applying a test speed of 2 mm/min under a temperature condition of standard temperature.

The value of the measurement result was determined by averaging three values excluding the maximum value and the minimum value after five measurements.

### (3) Measurement method of void content

Specimens having a size of 20 cm * 20 cm (width * length) were produced from the continuous fiber composite obtained in the above examples and comparative examples by a water jet cutting method, and in accordance with ASTM D792, the void content was measured by measuring the density at standard temperature.

The value of the measurement result was determined by averaging three values excluding the maximum value and the minimum value after five measurements.

The results of flexural strength, flexural modulus, and void content measured for the respective specimens of the above examples and comparative examples are shown in Tables 3 and 4 below.

**[Table 3] Measurement results of Examples 1 to 3 and Comparative Examples 1 to 3**

| | Flexural strength (MPa) | Flexural modulus (GPa) | Void content (%) |
|---|---|---|---|
| Example 1 | 405 | 58 | 6.25 |
| Example 2 | 462 | 67 | 6.21 |
| Example 3 | 550 | 89 | 3.06 |
| Comparative Example 1 | 170 | 14 | 14.3 |
| Comparative Example 2 | 182 | 15 | 12.54 |
| Comparative Example 3 | 195 | 20 | 11.89 |

**[Table 4] Measurement results of Examples 4 to 11 and Comparative Examples 4 to 11**

| | Tensile strength (MPa) | Tensile modulus (MPa) |
|---|---|---|
| Example 4 | 513 | 13,670 |
| Example 5 | 535 | 14,153 |
| Example 6 | 622 | 15,592 |
| Example 7 | 499 | 13,093 |
| Example 8 | 524 | 13,470 |
| Example 9 | 649 | 15,439 |
| Example 10 | 593 | 14,496 |
| Example 11 | 676 | 16,587 |
| Comparative Example 4 | 399 | 12,939 |
| Comparative Example 5 | 427 | 13,941 |
| Comparative Example 6 | 461 | 14,617 |
| Comparative Example 7 | 410 | 13,002 |
| Comparative Example 8 | 430 | 13,585 |
| Comparative Example 9 | 469 | 15,367 |
| Comparative Example 10 | 482 | 15,014 |
| Comparative Example 11 | 509 | 14,962 |

As shown in Table 3 above, it was confirmed that, as compared with the continuous fiber composites of Comparative Examples 1 to 3 which did not include the modified polyolefin layer, the continuous fiber composites of Examples 1 to 3 had higher flexural strength and flexural modulus, and the bonding between respective layers was also relatively high and stable.

In addition, the modified polyolefin layers included in the continuous fiber composites obtained in Examples 1 to 3 could minimize void spaces and pores that may occur at the interface with the continuous fiber layer or at the inside of the continuous fiber layer. Thus, the continuous fiber composites obtained in Examples 1 to 3 could have a low void content, for example, a void content of 7 % or less.

Finally, as shown in Table 4 above, it was confirmed that, as compared with the continuous fiber composite of Comparative Examples 4 to 11 obtained by laminating sheets produced by mixing (compounding) a modified polyolefin resin and a polypropylene resin on the continuous fibers, the continuous fiber composites obtained in Examples 4 to 11 had higher tensile strength and tensile elastic modulus and the bonding between respective layers was also relatively high and stable.

## Claims

1. A continuous fiber composite comprising: a continuous fiber layer;
a modified polyolefin layer formed on at least one surface of the continuous fiber layer and containing 50 wt% or more of a modified polyolefin resin grafted with a dicarboxylic acid component or an acid anhydride thereof; and
a polyolefin resin layer containing a polyolefin resin formed on the modified polyolefin layer,
wherein the modified polyolefin resin grafted with the dicarboxylic acid component or an acid anhydride thereof has a melt index of 100 g/10 min at 230 °C to 300 g/10 min at 230 °C (ASTM D1238), and includes a modified polypropylene grafted with maleic acid or maleic anhydride.

2. The continuous fiber composite of Claim 1,
wherein the modified polyolefin layer includes, as a base material, only the modified polyolefin resin grafted with a dicarboxylic acid component or an acid anhydride thereof.

3. The continuous fiber composite of Claim 1,
wherein the content of the dicarboxylic acid component or an acid anhydride thereof grafted in the modified polyolefin resin is 5 wt% to 1 5 wt%.

4. The continuous fiber composite of Claim 1,
wherein the dicarboxylic acid component includes dicarboxylic acid or a linear or branched C₁-C₁₀ alkyl ester compound thereof selected from the group consisting of maleic acid, phthalic acid, itaconic acid, citraconic acid, alkenyl succinic acid, cis-1,2,3,6-tetrahydrophthalic acid, and 4-methyl-1,2,3,6-tetrahydrophthalic acid.

5. The continuous fiber composite of Claim 1,
wherein the polyolefin resin layer includes a polypropylene resin having a melt index of 1 g/10 min at 230 °C to 100 g/10 min at 230 °C, and an isotactic index of 96 to 100.

6. The continuous fiber composite of Claim 1,
wherein the continuous fiber layer includes a structure in which one or more types of fibers selected from the group consisting of carbon fiber, glass fiber, and heat-resistant polymer fiber are arranged in the same direction.

7. The continuous fiber composite of Claim 1,
wherein the continuous fiber layer includes a structure in the form of a woven fabric in which one or more types of fibers selected from the group consisting of carbon fiber, glass fiber, and heat-resistant polymer fiber are woven and formed.

8. The continuous fiber composite of Claim 1, wherein the continuous fiber composite includes:
40 wt% to 90 wt% of the continuous fiber layer;
2 wt% to 20 wt% of the modified polyolefin layer; and
5 wt% to 50 wt% of the polyolefin resin layer.

9. The continuous fiber composite of Claim 1,
wherein a thickness ratio of the modified polyolefin layer to the continuous fiber layer is 0.05 to 1, and
a thickness ratio of the polyolefin resin layer to the continuous fibrous layer is 0.1 to 2.

10. The continuous fiber composite of Claim 1,
wherein the overall thickness of the continuous fiber composite is 0.1 mm to 10 mm.

11. A method for producing a continuous fiber composite of claim 1 comprising the steps of: laminating a modified polyolefin layer containing 50 wt% or more of a modified polyolefin resin grafted with a dicarboxylic acid component or an acid anhydride thereof on at least one surface of a continuous fiber layer; and
laminating a polyolefin resin layer containing a polyolefin resin on the modified polyolefin layer.

12. The method for producing a continuous fiber composite of Claim 11, wherein the step of laminating a modified polyolefin layer containing 50 wt% or more of a modified polyolefin resin grafted with a dicarboxylic acid component or an acid anhydride thereof on at least one surface of the continuous fiber layer
includes a step of laminating the modified polyolefin layer on at least one surface of the continuous fiber layer by applying a pressure of 0.1 MPa to 2.0 MPa at a temperature of 100 °C to 320 °C.

13. The method for producing a continuous fiber composite of Claim 11,
wherein the step of laminating a polyolefin resin layer containing a polyolefin resin on the modified polyolefin layer includes a step of laminating the polyolefin layer on the modified polyolefin layer by applying a pressure of 0.1 MPa to 2.0 MPa at a temperature of 100 °C to 320 °C.

14. The method for producing a continuous fiber composite of Claim 11,
wherein only the modified polyolefin resin grafted with a dicarboxylic acid component or an acid anhydride thereof is included as a base material of the modified polyolefin layer.

## Patentansprüche

1. Kontinuierlicher Faserverbundwerkstoff, umfassend: eine kontinuierliche Faserschicht;
eine modifizierte Polyolefinschicht, welche auf zumindest einer Fläche der kontinuierlichen Faserschicht gebildet wird und 50 Gew.-% oder mehr von einem modifizierten Polyolefinharz enthält, welches mit einer Dicarbonsäurekomponente oder einem Säureanhydrid davon gepfropft ist; und
eine Polyolefinharzschicht, welche ein Polyolefinharz enthält, welches auf der modifizierten Polyolefinschicht gebildet wird,
wobei das modifizierte Polyolefinharz, welches mit der Dicarbonsäurekomponente oder einem Säureanhydrid davon gepfropft ist, einen Schmelzindex von 100 g/10 min bei 230 °C bis 300 g/10 min bei 230 °C (ASTM D1238) hat und ein modifiziertes Polypropylen beinhaltet, welches mit Maleinsäure oder Maleinsäureanhydrid gepfropft ist.

2. Kontinuierlicher Faserverbundwerkstoff nach Anspruch 1,
wobei die modifizierte Polyolefinschicht als ein Basismaterial nur das modifizierte Polyolefinharz beinhaltet, welches mit einer Dicarbonsäurekomponente oder einem Säureanhydrid davon gepfropft ist.

3. Kontinuierlicher Faserverbundwerkstoff nach Anspruch 1,
wobei der Inhalt der in dem modifizierten Polyolefinharz gepfropften Dicarbonsäurekomponente oder eines Säureanhydrids davon 5 Gew.-% bis 15 Gew.-% ist.

4. Kontinuierlicher Faserverbundwerkstoff nach Anspruch 1,
wobei die Dicarbonsäurekomponente Dicarbonsäure oder eine lineare oder verzweigte C₁-C₁₀ Alkylester-Verbindung davon beinhaltet, welche ausgewählt ist aus der Gruppe, bestehend aus Maleinsäure, Phthalsäure, Itaconsäure, Zitrakonsäure, Alkenylbernsteinsäure, cis-1,2,3,6-Tetrahydrophthalsäure und 4-Methyl-1,2,3,6-Tetrahydrophthalsäure.

5. Kontinuierlicher Faserverbundwerkstoff nach Anspruch 1,
wobei die Polyolefinharzschicht ein Polypropylenharz mit einem Schmelzindex von 1 g/10 min bei 230 °C bis 100 g/10 min bei 230 °C und einem Isotaxieindex von 96 bis 100 beinhaltet.

6. Kontinuierlicher Faserverbundwerkstoff nach Anspruch 1,
wobei die kontinuierliche Faserschicht eine Struktur beinhaltet, in welcher ein oder mehrere Typen von Fasern, ausgewählt aus der Gruppe, bestehend aus Kohlefaser, Glasfaser und hitzebeständiger Polymerfaser, in der selben Richtung angeordnet sind.

7. Kontinuierlicher Faserverbundwerkstoff nach Anspruch 1,
wobei die kontinuierliche Faserschicht eine Struktur in der Form eines Gewebes beinhaltet, in welcher ein oder mehrere Typen von Fasern, ausgewählt aus der Gruppe, bestehend aus Kohlefaser, Glasfaser und hitzebeständiger Polymerfaser, gewebt und gestaltet sind.

8. Kontinuierlicher Faserverbundwerkstoff nach Anspruch 1, wobei der kontinuierliche Faserverbundwerkstoff beinhaltet:
40 Gew.-% bis 90 Gew.-% der kontinuierlichen Faserschicht;
2 Gew.-% bis 20 Gew.-% der modifizierten Polyolefinschicht; und
5 Gew.-% bis 50 Gew.-% der Polyolefinharzschicht.

9. Kontinuierlicher Faserverbundwerkstoff nach Anspruch 1,
wobei ein Dickenverhältnis von der modifizierten Polyolefinschicht zu der kontinuierlichen Faserschicht 0,05 zu 1 ist, und
ein Dickenverhältnis von der Polyolefinharzschicht zu der kontinuierlichen fasrigen Schicht 0,1 zu 2 ist.

10. Kontinuierlicher Faserverbundwerkstoff nach Anspruch 1,
wobei die Gesamtdicke des kontinuierlichen Faserverbundwerkstoffs 0,1 mm bis 10 mm ist.

11. Verfahren zum Herstellen eines kontinuierlichen Faserverbundwerkstoffs nach Anspruch 1, umfassend die Schritte des: Laminierens einer modifizierten Polyolefinschicht, welche 50 Gew.-% oder mehr von einem modifizierten Polyolefinharz, welches mit einer Dicarbonsäurekomponente oder einem Säureanhydrid davon gepfropft ist, enthält, auf zumindest einer Fläche einer kontinuierlichen Faserschicht; und
Laminierens einer Polyolefinharzschicht, welche ein Polyolefinharz auf der modifizierten Polyolefinschicht enthält.

12. Verfahren zum Herstellen eines kontinuierlichen Faserverbundwerkstoffs nach Anspruch 11, wobei der Schritt des Laminierens einer modifizierten Polyolefinschicht, welche 50 Gew.-% oder mehr von einem modifizierten Polyolefinharz, welches mit einer Dicarbonsäurekomponente oder einem Säureanhydrid davon gepfropft ist, enthält, auf zumindest einer Fläche einer kontinuierlichen Faserschicht einen Schritt des Laminierens der modifizierten Polyolefinschicht auf zumindest einer Fläche der kontinuierlichen Faserschicht mittels Anwenden eines Drucks von 0,1 MPa bis 2,0 MPa bei einer Temperatur von 100 °C bis 320 °C beinhaltet.

13. Verfahren zum Herstellen eines kontinuierlichen Faserverbundwerkstoffs nach Anspruch 11,
wobei der Schritt des Laminierens einer Polyolefinharzschicht, welche ein Polyolefinharz enthält, auf der modifizierten Polyolefinschicht einen Schritt des Laminierens der Polyolefinschicht auf der modifizierten Polyolefinschicht mittels Anwenden eines Drucks von 0,1 MPa bis 2,0 MPa bei einer Temperatur von 100 °C bis 320 °C beinhaltet.

14. Verfahren zum Herstellen eines kontinuierlichen Faserverbundwerkstoffs nach Anspruch 11,
wobei nur das modifizierte Polyolefinharz, welches mit einer Dicarbonsäurekomponente oder einem Säureanhydrid davon gepfropft ist, als ein Basismaterial der modifizierten Polyolefinschicht beinhaltet ist.

## Revendications

1. Composite de fibres continues comprenant : une couche de fibres continues ;
une couche de polyoléfine modifiée formée sur au moins une surface de la couche de fibres continues et contenant 50% en poids ou plus d'une résine de polyoléfine modifiée greffée d'un composant d'acide dicarboxylique ou d'un anhydride d'acide de celui-ci ; et
une couche de résine de polyoléfine contenant une résine de polyoléfine formée sur la couche de polyoléfine modifiée,
dans lequel la résine de polyoléfine modifiée greffée du composant d'acide dicarboxylique ou d'un anhydride d'acide de celui-ci a un indice de fluidité compris entre 100 g/10 min à 230°C et 300 g/10 min à 230°C (ASTM D1238), et comporte un polypropylène modifié greffé d'un acide maléique ou d'un anhydride maléique.

2. Composite de fibres continues de la revendication 1,
dans lequel la couche de polyoléfine modifiée comporte, en tant que matériau de base, uniquement la résine de polyoléfine modifiée greffée d'un composant d'acide dicarboxylique ou d'un anhydride d'acide de celui-ci.

3. Composite de fibres continues de la revendication 1,
dans lequel la teneur en composant d'acide dicarboxylique ou en un anhydride d'acide de celui-ci greffé dans la résine de polyoléfine modifiée est comprise entre 5% en poids et 15% en poids.

4. Composite de fibres continues de la revendication 1,
dans lequel le composant d'acide dicarboxylique comporte un acide dicarboxylique ou un composé d'ester alkylique en C₁ à C₁₀ linéaire ou ramifié de celui-ci choisi dans le groupe constitué de l'acide maléique, de l'acide phtalique, de l'acide itaconique, de l'acide citraconique, de l'acide alcénylsuccinique, de l'acide cis-1,2,3,6-tétrahydrophtalique et de l'acide 4-méthyl-1,2,3,6-tétrahydrophtalique.

5. Composite de fibres continues de la revendication 1,
dans lequel la couche de résine de polyoléfine comporte une résine de polypropylène ayant un indice de fluidité compris entre 1 g/10 min à 230°C et 100 g/10 min à 230°C et un indice isotactique compris entre 96 et 100.

6. Composite de fibres continues de la revendication 1,
dans lequel la couche de fibres continues comporte une structure dans laquelle un ou plusieurs type(s) de fibres choisies dans le groupe constitué de fibres de carbone, de fibres de verre et de fibres polymères résistant à la chaleur sont agencées dans la même direction.

7. Composite de fibres continues de la revendication 1,
dans lequel la couche de fibres continues comporte une structure sous la forme d'un tissu tissé dans lequel un ou plusieurs type(s) de fibres choisies dans le groupe constitué de fibres de carbone, de fibres de verre et de fibres polymères résistant à la chaleur sont tissées et formées.

8. Composite de fibres continues de la revendication 1, dans lequel le composite de fibres continues comporte :
40% en poids à 90% en poids de la couche de fibres continues ;
2% en poids à 20% en poids de la couche de polyoléfine modifiée ; et
5% en poids à 50% en poids de la couche de résine de polyoléfine.

9. Composite de fibres continues de la revendication 1,
dans lequel le rapport d'épaisseur de la couche de polyoléfine modifiée sur la couche de fibres continues est compris entre 0,05 et 1, et
le rapport d'épaisseur de la couche de résine de polyoléfine sur la couche de fibres continues est compris entre 0,1 et 2.

10. Composite de fibres continues de la revendication 1,
dans lequel l'épaisseur hors tout du composite de fibres continues est comprise entre 0,1 mm et 10 mm.

11. Procédé de production d'un composite de fibres continues de la revendication 1, comprenant les étapes consistant : à stratifier une couche de polyoléfine modifiée contenant 50% en poids ou plus d'une résine de polyoléfine modifiée greffée d'un composant d'acide dicarboxylique ou d'un anhydride d'acide de celui-ci sur au moins une surface d'une couche de fibres continues ; et
à stratifier une couche de résine de polyoléfine contenant une résine de polyoléfine sur la couche de polyoléfine modifiée.

12. Procédé de production d'un composite de fibres continues de la revendication 11, dans lequel l'étape de stratification d'une couche de polyoléfine modifiée contenant 50% en poids ou plus d'une résine de polyoléfine modifiée greffée d'un composant d'acide dicarboxylique ou d'un anhydride d'acide de celui-ci sur au moins une surface de la couche de fibres continues comporte une étape de stratification de la couche de polyoléfine modifiée sur au moins une surface de la couche fibres continues en appliquant une pression comprise entre 0,1 MPa et 2,0 MPa à une température comprise entre 100°C et 320°C.

13. Procédé de production d'un composite de fibres continues de la revendication 11,
dans lequel l'étape de stratification d'une couche de résine de polyoléfine contenant une résine de polyoléfine sur la couche de polyoléfine modifiée comporte une étape de stratification de la couche de polyoléfine sur la couche de polyoléfine modifiée en appliquant une pression comprise entre 0,1 MPa et 2,0 MPa à une température comprise entre 100°C et 320°C.

14. Procédé de production d'un composite de fibres continues de la revendication 11,
dans lequel seule la résine de polyoléfine modifiée greffée d'un composant d'acide dicarboxylique ou d'un anhydride d'acide de celui-ci est incluse en tant que matériau de base de la couche de polyoléfine modifiée.
